# EUROPÄISCHE PATENTSCHRIFT

(11) **EP 3 683 960 B1**
(45) Veröffentlichungstag und Bekanntmachung des Hinweises auf die Patenterteilung: **31.07.2024**
(21) Anmeldenummer: 20157472.0
(22) Anmeldetag: 20.12.2017
(51) Int. Cl.: H02S 20/10

(54) **PHOTOVOLTAIK-ANLAGE**
PHOTOVOLTAIC SYSTEM
INSTALLATION PHOTOVOLTAÏQUE

(30) Priorität: 23.12.2016 DE 102016015436
(43) Veröffentlichungstag der Anmeldung: 22.07.2020
(62) Teilanmeldung aus: 17822277.4
(73) Patentinhaber: Next2Sun GmbH, 66663 Merzig (DE)
(72) Erfinder: Hildebrandt, Heiko, 79110 Freiburg (DE); Probst, Markus, 66780 Rehlingen-Siersburg (DE); Brill, Thomas, 66701 Beckingen-Reimsbach (DE); Zwosta, Nicolai, 10555 Berlin (DE); Baldy, Robert, 10555 Berlin (DE)
(74) Vertreter: Mertzlufft-Paufler, Cornelius

(56) Entgegenhaltungen:
- EP-A1- 2 669 596
- WO-A2-2015/106170
- DE-U1- 202014 105 516
- JP-A- 2002 076 416
- JP-A- 2002 237 612
- JP-A- 2003 229 591
- JP-A- 2004 335 903
- JP-A- 2006 080 568
- JP-A- 2014 236 199
- US-A1- 2011 005 583
- US-A1- 2012 324 808
- US-A1- 2014 053 890

## Beschreibung

Die Erfindung betrifft eine Photovoltaik(PV)-Anlage mit mehreren bifazialen Photovoltaik-Modulen, die aufrecht stehend an einer Tragkonstruktion angeordnet sind.

Klassische PV-Anlagen, die unifaziale PV-Module zur Stromerzeugung verwenden, werden häufig in geneigter Form aufgestellt. Dabei wird die einzige aktive Fläche der jeweiligen PV-Module, welche solare Strahlungsenergie in elektrische Energie wandeln kann, typischerweise nach Süden ausgerichtet. Solche Anlagen haben den Nachteil, dass sie ihre Spitzenleistung in der Mittagszeit abgeben. Dies kann das Stromnetz belasten, nämlich bei einem Überangebot derartigen Stromes.

Daher werden seit einigen Jahren auch PV-Anlagen mit PV-Modulen erprobt, welche beidseitig aktive Flächen aufweisen. Diese als bifazial bezeichneten PV-Module werden aufrecht positioniert, sodass Vorder- und Rückseite jeweils von der Sonne bestrahlt werden. Werden die bifazialen PV-Module derartiger PV-Anlagen in Nord-Süd-Richtung aufgestellt, so können sie Sonnenlicht aus östlichen und westlichen Richtungen, insbesondere in frühen Morgenstunden und späten Abendstunden, einfangen. Damit wird eine zu klassischen Anlagen komplementäre Leistungsabgabe erreicht, die um die Mittagszeit gering ausfällt, jedoch am Morgen und am Abend Spitzenwerte erreicht. Eine solche Strom-Tageskurven-Charakteristik ist im Sinne eines gleichmäßigen Stromangebots im Netz über den Tag verteilt vorteilhaft. Daneben können PV-Anlagen mit bifazialen PV-Modulen jedoch auch in anderen Orientierungen als in Nord-Süd-Richtung vorteilhaft eingesetzt werden.

Tragkonstruktionen, die für vertikal ausgerichtete beziehungsweise aufrechtstehende PV-Module vorgesehen sind, sind beispielsweise aus JP 2004 335903, JP 2002 0766416, JP 2003 229591, JP 2006 080568, US 2001 0005583 A1 oder EP 2 669 596 A1 bekannt.

Bei bifazialen PV-Modulen stellen sich im Unterschied zu unifazialen PV-Modulen jedoch neuartige technische Probleme, da auch die Rückseite der Module zur Stromerzeugung genutzt werden soll. Die bisher für unifaziale PV-Module entwickelten Tragkonstruktionen und Aufstellungskonzepte sind daher nur bedingt anwendbar, beziehungsweise würden aufwändige und daher teure Anpassungen erfordern.

Aufgabe der vorliegenden Erfindung ist es daher, eine PV-Anlage bereit zu stellen, bei der mehrere bifaziale PV-Module in senkrechter Anordnung montiert werden können und die den speziellen Anforderungen von bifazialen Modulen gerecht wird. Hierzu soll insbesondere eine Tragkonstruktion bereitgestellt werden, die sich nicht nur kostengünstig fertigen lässt, sondern auch ein zügiges und daher preisgünstiges Aufstellen der PV-Anlage ermöglicht. Zudem soll die Tragkonstruktion eine ausreichende Standfestigkeit bei typischen Witterungsbedingungen aufweisen.

Zur Lösung dieser Aufgaben sind erfindungsgemäß bei einer Photovoltaik-Anlage die Merkmale von Anspruch 1 vorgesehen. Insbesondere wird somit erfindungsgemäß zur Lösung der Aufgabe bei einer Photovoltaik-Anlage der eingangs genannten Art vorgeschlagen, dass die Tragkonstruktion mehrere Pfosten aufweist, die an oder im Erdreich befestigt, insbesondere verankert, sind, wobei an den Pfosten Riegel befestigt sind, die jeweils zwei benachbarte Pfosten miteinander verbinden und wobei jeweils zwei Pfosten und zwei Riegel ein im Wesentlichen rechteckiges Montagefeld definieren, in dem mindestens ein PV-Modul angeordnet ist. Ferner wird vorgeschlagen, dass die PV-Module an den Riegeln befestigt sind, wobei hierzu Halteelemente vorgesehen sind, die hierzu Nutabschnitte bereitstellen, in die ein Rand des jeweiligen PV-Moduls eingesteckt ist. Zur Lösung der Aufgabe ist ferner vorgesehen, dass an dem jeweiligen Halteelement eine Anlagefläche ausgebildet ist, mit der das jeweilige Halteelement flächig an dem jeweiligen Riegel anliegt. Denn diese erfindungsgemäße Ausgestaltung ist für ein positionssicheres und verkippungsfreies Montieren der Halteelemente vorteilhaft.

Ein Montagefeld kann demnach ein PV-Modul oder mehrere PV-Module aufnehmen, wobei auch weitere Unterteilungen des Montagefelds, beispielsweise mittels zusätzlicher Riegel und/oder vertikal verlaufender Zwischenpfosten, vorgesehen sein können. Als im Wesentlichen rechteckig kann das Montagefeld gemäß der Erfindung insbesondere dann angesehen werden, wenn das Montagefeld zur Aufnahme eines PV-Modules mit rechteckiger Außenkontur geeignet ist. Daher kann insbesondere vorgesehen sein, dass jeweils zwei Pfosten und zwei Riegel ein Montagefeld definieren, in dem mindestens ein PV-Modul angeordnet ist, wobei Kanten der Pfosten und Riegel, welche zu den PV-Modulen ausgerichtet sind und somit das Montagefeld begrenzen, vorzugsweise gleichmäßig, beabstandet zu Außenkanten des mindestens einen PV-Moduls angeordnet sind.

In den allermeisten Aufstellungssituationen ist es vorteilhaft, wenn die mehreren bifazialen Photovoltaik-Module senkrecht stehend an der Tragkonstruktion angeordnet sind.

Mit anderen Worten stellt die Erfindung somit eine Tragkonstruktion bereit, bei der Pfosten und Riegel in bevorzugt regelmäßigen Abständen und bevorzugt in rechten Winkeln miteinander verbunden sind, sodass jeweils zwei Pfosten und zwei Riegel ein rechteckiges Montagefeld definieren, in welches ein bifaziales PV-Modul in senkrechter Aufhängung eingesetzt ist. Damit können die PV-Module beidseitig Sonnenlicht einsammeln, um dieses in elektrische Energie zu wandeln.

Für eine hohe Steifigkeit der Tragkonstruktion ist es zudem vorteilhaft, wenn zumindest einzelne Riegel beidseitig an Pfosten durch Befestigungsmittel befestigt sind. Hierbei kann eine zweckmäßige Befestigung der Riegel im Sinne der Erfindung insbesondere durch Verschraubungen, insbesondere Bohrschrauben oder Gewindeschrauben, durch Nieten, Stifte, sowie durch Verschweißen, Verkleben oder durch einfachen Formschluss realisiert sein.

Von Vorteil ist dabei, dass eine erfindungsgemäße PV-Anlage mit den Merkmalen des Anspruchs 1 kostengünstig hergestellt sowie effizient und daher kostengünstig aufgestellt werden kann. Gleichzeitig gewährleistet die erfindungsgemäße Tragkonstruktion eine hohe Stabilität, insbesondere gegen Windlasten sowie eine effiziente Ausnutzung der aktiven Flächen der bifazialen Module.

Die Tragkonstruktion kann beispielsweise mittels einer Verankerung im Erdreich fundamentiert sein. Diese kann beispielsweise durch Erdanker, Erdschrauben, Rammpfosten oder Betonfundamente realisiert sein, wobei ergänzend Abspannungen vorgesehen sein können. Ist eine Verankerung im Erdreich zu vermeiden, zum Beispiel bei Aufstellung der PV-Anlage auf Deponieflächen, so kann auch eine Fundamentierung der Tragkonstruktion mittels einer Beschwerung der Pfosten am Boden erreicht werden. Weiter können sowohl die Pfosten als auch die Riegel in Form von Längsprofilen, beispielsweise als Aluminium-Stranggussprofile, ausgestaltet sein, wodurch ein besonders sparsamer Materialeinsatz und damit eine leichte Tragkonstruktion ermöglicht werden. Die Tragkonstruktion kann beispielsweise aus C-, S-, U-, Σ- oder Ω-Profilen, insbesondere aus Kombinationen solcher Profile, hergestellt sein. Hierbei können beispielsweise auch schräge und/oder runde Formelemente an den Pfosten und/oder Riegeln vorgesehen sein, um die Verschattung der PV-Module zu minimieren. Eine weitere Ausgestaltung sieht Pfosten und/oder Riegel aus warm- oder kaltgewalztem Stahl vor, vorzugsweise versehen mit einem Korrosionsschutz.

Erfindungsgemäß kann die Aufgabe auch durch weitere vorteilhafte Ausführungen der Unteransprüche gelöst werden.

Beispielsweise ist es vorteilhaft, wenn in der Gebrauchsstellung der PV-Anlage die Pfosten im Wesentlichen vertikal und/oder die Riegel im Wesentlichen horizontal ausgerichtet sind. Durch eine derartige Ausrichtung der Pfosten und Riegel kann insbesondere gewährleistet werden, dass zu den PV-Modulen ausgerichtete Kanten der Pfosten und Riegel, welche die einzelnen Montagefelder begrenzen, vorzugsweise gleichmäßig, beabstandet zu Außenkanten von rechteckigen PV-Modulen der PV-Anlage angeordnet sind. Hierdurch ist/sind für rechteckige PV-Module, die am Markt typisch sind, ein sparsamer Materialeinsatz für die Tragkonstruktion und/oder eine gute Flächenausnutzung erreichbar, da der Abstand der Pfosten und Riegel zu den PV-Modulen möglichst klein gewählt werden kann. Anders als bei herkömmlichen PV-Anlagen für unifaziale PV-Module wird hierbei insbesondere vermieden, dass Pfosten oder Riegel unterhalb beziehungsweise hinter einem PV-Modul verlaufen, was in einer unerwünschten Abschattung der PV-Module resultieren würde.

Daneben kann bei einer erfindungsgemäßen PV-Anlage beispielsweise vorgesehen sein, dass in vertikaler Richtung mehrere, insbesondere bis zu vier, PV-Module übereinander angeordnet sind. Durch das Vorsehen mehrerer übereinander verlaufender Reihen aus PV-Modulen lässt sich somit die nutzbare aktive Fläche insgesamt steigern, ohne dass zusätzliche Pfosten aufgestellt werden müssen. Das Vorsehen von mehr als vier übereinander angeordneten PV-Modulen hat den Nachteil, dass die Windlast erheblich zunimmt, sodass die Fundamentierung der Pfosten wesentlich aufwendiger und damit teurer ausgestaltet sein muss. Daher wird vorgeschlagen, die Anzahl übereinander angeordneter Module auf vier zu begrenzen. Das Optimum der Zeilenzahl von übereinander angeordneten PV-Modulen liegt zwischen zwei und drei.

Für ein möglichst effizientes Aufstellen der Pfosten der PV-Anlage kann vorgesehen sein, dass die Pfosten zumindest in einen mit dem Erdreich verbundenen Befestigungsabschnitt und einen mit dem Befestigungsabschnitt verbindbaren oder verbundenen Halteabschnitt unterteilt sind. Hierbei erstreckt sich der Halteabschnitt oberhalb des Befestigungsabschnitts. Von Vorteil ist dabei, dass der Befestigungsabschnitt zunächst unabhängig von dem Halteabschnitt in oder am Erdreich fundamentiert werden kann. Dies ist beispielsweise dann vorteilhaft, wenn der Befestigungsabschnitt durch Einrammen in das Erdreich fundamentiert werden soll. Hierzu kann der Befestigungsabschnitt insbesondere in Form eines Rammprofils ausgestaltet sein, sodass der Be-festigungsabschnitt eine ausreichende Steifigkeit für ein Einrammen aufweist.

Unter Einfallswinkel wird hier und im Folgenden derjenige Winkel verstanden, den ein einfallender Sonnenstrahl mit einem Lot einer aktiven Fläche eines PV-Moduls einschließt. Somit entspricht ein senkrechter Lichteinfall auf die aktive Fläche eines PV-Moduls einem Einfallswinkel von 0°. Da die PV-Module senkrecht angeordnet sind, kann der Einfallswinkel insbesondere ein seitlicher Einstrahlwinkel sein.

Eine hoch effiziente PV-Anlage kann erreicht werden, wenn die aktiven Flächen der PV-Module von den Pfosten und/oder Riegeln beabstandet angeordnet sind. Dadurch kann weitgehend vermieden werden, dass bei schrägem Lichteinfall die Pfosten oder Riegel Randbereiche der aktiven Flächen der PV-Module verschatten, was sich negativ auf die Effizienz der Anlage auswirken würde.

Es ist besonders vorteilhaft, wenn die aktiven Flächen der PV-Module dabei derart von den Pfosten beabstandet sind, dass zumindest bis zu einem Einfallswinkel von 20°, besonders bevorzugt zumindest bis zu einem Einfallswinkel von 30°, eine Abschattung der aktiven Fläche durch Pfosten ausgeschlossen ist. Alternativ oder ergänzend kann vorgesehen sein, dass die aktiven Flächen der PV-Module von den Riegeln derart beabstandet angeordnet sind, dass zumindest bis zu einem Einfallswinkel von 25°, bevorzugt zumindest bis zu einem Einfallswinkel von 30° oder sogar 40°, eine Abschattung der aktiven Fläche durch Riegel ausgeschlossen ist.

Eine noch kompaktere PV-Anlage kann dadurch erreicht werden, dass die aktiven Flächen der PV-Module an einander gegenüberliegenden Seiten asymmetrisch beabstandet zu Pfosten und/oder Riegeln angeordnet sind. Beispielsweise kann vorgesehen sein, dass einzelne PV-Module so von den Pfosten beabstandet angeordnet sind, dass für nördliche Richtungen zumindest bis zu einem Einfallswinkel von 20°, bevorzugt zumindest bis zu einem Einfallswinkel von 30°, in Bezug auf die aktive Fläche des PV-Moduls eine Abschattung derselben ausgeschlossen ist, während für südliche Richtungen zumindest bis zu einem Einfallswinkel von 45°, bevorzugt zumindest bis zu einem Einfallswinkel von 60°, in Bezug auf die aktive Fläche des PV-Moduls eine Abschattung derselben ausgeschlossen ist.

Um eine möglichst einfache Montage der PV-Anlage zu ermöglichen, kann vorgesehen sein, dass an den Pfosten Halteflächen ausgebildet sind, an denen ein zugehöriger Riegel flächig befestigbar ist. Durch das flächige Anliegen eines Riegels an einer Haltefläche können von dem Riegel eingeleitete Kräfte und Momente effektiv von dem Pfosten aufgenommen werden.

Die Halteflächen können besonders einfach als Flansche an einem Profil und/oder als Laschen an einer Öffnung, beispielsweise eingebracht in eine Außenfläche eines Profils, ausgebildet sein. Hierzu kann auch vorgesehen sein, dass Halteflächen auf einer Seite eines Pfostens als Flansche und auf der anderen Seite als Laschen ausgebildet sind. Laschen oder Flansche werden somit als Alternativen angesehen, wobei es sowohl für Laschen als auch Flansche bevorzugt ist, wenn diese rechtwinklig von den Pfosten abstehen und/oder in Richtung einer Ebene, vorzugsweise seitlich versetzt zu dieser verlaufen, die durch die PV-Module gebildet wird. Ferner können auch Bohrungen, Langlöcher oder dergleichen an Laschen und/oder Flanschen vorgesehen sein, um die Befestigung der Riegel mittels Schrauben oder dergleichen zu erleichtern.

Ein als Haltefläche dienender Flansch kann insbesondere entlang eines gesamten Halteabschnitts eines Pfostens verlaufen; der Flansch kann somit Teil eines Profils sein; er kann aber auch nachträglich an einen Pfosten angefügt worden sein, beispielsweise durch Anschweißen. Bei Verwendung von Profilen, die nur einfache Flansche an ihren Enden aufweisen, beispielsweise einem S-Profil, können zusätzliche, an ein Profil anschraubbare Winkelverbinder vorgesehen sein. Damit lässt sich bei Befestigung eines Riegels an einem einfachen Flansch in Verbindung mit einem Winkelverbinder, ein geschlossener, umlaufender Kraftfluss bilden und somit die Steifigkeit der Konstruktion erhöhen. Daneben können Flansche an Pfosten auch lediglich dazu vorgesehen sein, die Biegesteifigkeit der Pfosten zu erhöhen.

Die Form einer Lasche kann durch die Form der zugehörigen Öffnung in einem Profil vorgegeben sein, beispielsweise indem die Öffnungen und zugehörigen Laschen durch Prozesse wie Stanzen oder Laserschneiden in Verbindung mit Biegen oder Formen kostengünstig an den Pfosten erzeugt werden. Hierbei kann aus einer Öffnung auch ein Laschenpaar gebildet sein, welches beidseitig der Öffnung angeordnet ist, um ein beidseitiges Fassen eines Riegels zu ermöglichen.

Die Robustheit und Steifigkeit der Tragkonstruktion lässt sich weiter steigern, wenn die Halteflächen paarweise ausgebildet sind. Denn ein Paar aus Halteflächen kann einen zwischen diesen Halteflächen eingeschobenen Riegel beidseitig fassen, und somit das Ableiten von Kräften weiter verbessern. Um ein beidseitiges Umfassen eines Riegels durch Halteflächen zu erleichtern, ist es zudem vorteilhaft, wenn die Riegel schmaler als die Pfosten, insbesondere schmaler als ein Abstand zwischen paarweise ausgebildeten Halteflächen, ausgebildet sind.

Alternativ oder ergänzend kann auch vorgesehen sein, Riegel mittels Winkelverbindern an den Pfosten zu befestigen. Hierbei sind solche Winkelverbinder bevorzugt, die zu beiden Seiten eines zu befestigenden Riegels Halteflächen aufweisen, die flächig mit einem Pfosten verbindbar sind.

Eine weitere mögliche Ausgestaltung sieht vor, dass an den Pfosten Durchstecköffnungen ausgebildet sind, um jeweils einen Riegel oder dessen Ende aufzunehmen. Die Ausbildung von Durchstecköffnungen hat den Vorteil, dass Verkippungen der Pfosten gegeneinander und damit verbundene Schwankungen der Abstände zwischen den Pfosten leicht ausgeglichen werden können, indem die Riegel mehr oder weniger tief in die Durchstecköffnungen gesteckt werden.

Es versteht sich, dass es für eine einfache Montage hierbei vorteilhaft ist, wenn die Durchstecköffnung etwas größer als der von ihr aufzunehmende Riegel ausgestaltet ist. Es kann jedoch insbesondere vorgesehen sein, dass die Durchstecköffnung in vertikaler Richtung mindestens das 1.25-fache, bevorzugt mindestens das 1.5-fache der Höhe eines Riegels aufweist. Damit wird eine Möglichkeit geschaffen, unterschiedliche Höhenlagen der Pfosten, beispielsweise in welligem Gelände, zumindest teilweise auszugleichen, indem die Riegel in verschiedenen Höhen montiert werden.

Im Gegensatz zu seitlich an Außenflächen der Pfosten mittels befestigter Winkelverbinder gebildeter Durchsteckkanäle bieten Durchstecköffnungen zudem den Vorteil, dass diese mittig in Bezug auf den Pfosten angeordnet werden können. Damit lässt sich besonders einfach erreichen, dass die PV-Module in Bezug auf Pfosten und/oder Riegel mittig platziert sind. Eine solche Anordnung ist wegen minimierter Abschattung auf beiden Seiten eines PV-Moduls bevorzugt.

Bei Verwendung von Durchstecköffnungen ist es besonders vorteilhaft, wenn zumindest der Halteabschnitt des Pfostens in Form eines Omega-Profils ausgebildet ist. Denn bei Verwendung eines Omega-Profils können zwei horizontal benachbarte Riegel von den beiden offenen Enden des Omega-Profils, die durch ein entlang des Profils verlaufendes paralleles Flanschpaar gebildet sein können, beidseitig gefasst sein. Dadurch kann ein geschlossener Kraftfluss in dem Omega-Profil ausgebildet werden. Hierbei können einzelne Riegel durch in Seitenflächen des Omega-Profils ausgebildete Durchstecköffnungen geführt sein. Bei dieser Ausgestaltung können somit links und rechts eines als Omega-Profil ausgestalteten Pfostens verlaufende Riegel an einem auf einer Seite des Pfostens verlaufenden Flanschpaar befestigt sein. Damit ist eine besonders einfach zu montierende und dennoch robuste Ausgestaltung der Tragkonstruktion benannt.

Eine ähnlich robuste Verbindung zwischen Pfosten und Riegel unter Verwendung von Durchstecköffnungen lässt sich erreichen, wenn zumindest der Halteabschnitt des Pfostens in Form eines C- oder U-Profils ausgebildet ist. In diesem Fall können an Seitenflächen des jeweiligen Profils Durchstecköffnungen ausgebildet sein, die aufgebogene Laschen aufweisen, die ihrerseits Halteflächen zur Montage von Riegeln bereitstellen.

Sollen zwei links und rechts eines Pfostens verlaufende Riegel an einer Lasche montiert werden, ist es vorteilhaft, wenn die Höhe der Lasche mehr als das 1.25-fache der Höhe eines Riegels aufweist, bevorzugt mindestens 1.5-mal die Höhe eines Riegels aufweist. Durch diese Ausgestaltung ist eine Lasche, beziehungsweise ein Laschenpaar, einer Durchstecköffnung somit hoch genug, um zwei Riegel zu halten. Eine zusätzlich höher ausgestaltete Durchstecköffnung kann dennoch nützlich sein, um einen verbesserten Ausgleich der Montagehöhe von Riegeln zu ermöglichen.

Bei einer Ausgestaltung können Durchstecköffnungen eine oder mehrere, wie bereits zuvor beschriebene Laschen aufweisen, die Halteflächen zur Montage eines Riegels, bevorzugt von zwei Riegeln, bereitstellen. Damit ergeben sich mannigfaltige Ausgestaltungen, auch in Verbindung mit Omega-Profilen. Im Gegensatz zu separat zu befestigenden Winkelverbindern bieten Laschen den Vorteil eines geringeren Montageaufwands, da sie nicht wie Winkelverbinder an den Profilen befestigt werden müssen. Zudem sind aufgebogene Laschen in der Regel drehfest mit einer Vertikalfläche eines Profils verbunden, wodurch auf einfache Weise eine hohe Verwindungssteifigkeit der Tragkonstruktion erreicht wird.

Allgemein, insbesondere bei allen bisher beschriebenen Ausgestaltungen von Durchstecköffnungen, kann insbesondere vorgesehen sein, dass einzelne Durchstecköffnungen wenigstens zweimal, insbesondere wenigstens dreimal, die Höhe eines Riegels aufweisen. Durch diese Ausgestaltung kann ein Riegel oder insbesondere zwei Riegel, in einer Durchstecköffnung platziert sein, wobei, durch die größere Ausgestaltung der Durchstecköffnung, die Montagehöhe des Riegels, beziehungsweise der Riegel, in Bezug auf die Durchstecköffnung variabel sein kann, also insbesondere bei der Montage variiert werden kann. Dadurch lässt sich ein Höhenausgleich erreichen, was insbesondere bei welligem Aufstellgelände von Vorteil ist.

Alternativ zur Aufnahme von mindestens zwei Riegeln in einer Durchstecköffnung sieht eine weitere Ausgestaltung vor, dass in einer Durchstecköffnung nur ein Riegel platziert ist, während ein weiterer Riegel auf einer der Durchstecköffnung gegenüberliegenden Seite des Pfostens ohne Durchstecköffnung und mittels am Pfosten ausgebildeter Halteflächen montiert ist. Hierbei kann insbesondere vorgesehen sein, dass der durch die Durchstecköffnung geführte Riegel auf der der Durchstecköffnung gegenüberliegenden Seite des Pfostens an derselben Haltefläche wie der weitere Riegel montiert ist. Mit anderen Worten kann gemäß einer Ausgestaltung insbesondere vorgesehen sein, dass an einer Haltefläche ein durch eine Durchstecköffnung gesteckter Riegel und ein weiterer Riegel befestigt sind.

Eine weitere Ausgestaltung sieht vor, dass die Pfosten zumindest in dem oder einem Halteabschnitt ein Profil mit einer C-förmigen oder U-förmigen Grundform aufweisen. Hierbei können an den Enden des Profils zusätzliche Halteflächen als Flansche ausgebildet sein. Die Flansche können entweder während der Herstellung des Profils ausgebildet oder nachträglich an dem Profil befestigt worden sein.

Gemäß einer wieder anderen Ausgestaltung kann vorgesehen sein, dass die Pfosten zumindest in dem oder einem Halteabschnitt ein Profil mit einer Z-förmigen oder S-förmigen Grundform aufweisen, wobei an den Enden des Profils zusätzliche Halteflächen als Flansche ausgebildet sind. S-förmige Profile sind im Handel teilweise auch als "Z-plus"-Profile bekannt. "Zusätzliche Halteflächen/Flansche" ist hier, wie auch bereits zuvor bei den C- oder U-förmigen Profilen, so zu verstehen, dass die Grundform der Profile bereits ohne die Flansche gegeben ist, auch wenn diese bereits beim Herstellen des Profils erzeugt werden.

Wie eingangs bereits erwähnt, stellen die erfindungsgemäßen Halteelemente Nutabschnitte bereit, in die ein Rand des jeweiligen PV-Moduls eingesteckt bzw. einsteckbar ist, und zwar vorzugsweise unter Verzicht auf eine kraftschlüssige Verbindung. Hierbei können die Nutabschnitte mit einem plastischen oder elastischen Material, vorzugsweise EPDM, ausgekleidet sein, um die PV-Module vor Beschädigungen zu schützen. Ferner kann ergänzend vorgesehen sein, die PV-Module mit den Halteelementen zu verkleben, um ein Verrutschen der PV-Module in den Nutabschnitten zu unterbinden.

Die erfindungsgemäßen Halteelemente können beispielsweise als kaltgeformte Stahlteile, vorzugsweise aus korrosionsbeständigem Stahl und/oder mit Korrosionsschutz, gefertigt sein oder aus Kunststoff oder aus Leichtmetallen wie Aluminium. Zudem können erfindungsgemäße Halteelemente insbesondere einen Belag aus Gummi aufweisen. Die Halteelemente können ferner in Form von Profilen oder als Spritz- oder Druckgussteile hergestellt sein.

Die PV-Module können im Bereich der Nutabschnitte bevorzugt beidseitig von dem jeweiligen Halteelement gefasst sein, sodass eine sichere Halterung der PV-Module gewährleistbar ist.

Besonders bevorzugt sind an den erfindungsgemäßen Halteelementen jeweils zwei gegenüberliegende Nutabschnitte ausgebildet. Somit kann ein einzelnes Halteelement zwei sich gegenüber liegende PV-Module halten. Hierbei ist es vorteilhaft, wenn die zwei Nutabschnitte in einer gemeinsamen Ebene verlaufen. Ergänzend oder alternativ kann auch vorgesehen sein, dass die zwei Nutabschnitte jeweils mittig in Bezug auf seitliche Außenflächen des Halteelements angeordnet sind. Durch derartige Ausgestaltungen wird eine, bevorzugte, mittige Positionierung für alle PV-Elemente in Bezug auf Pfosten und/oder Riegel wesentlich erleichtert.

Ferner kann auch vorgesehen sein, dass die Halteelemente jeweils eine, vorzugsweise rechtwinklige, Querschnittsverjüngung aufweisen. An der Stelle, an der sich der Querschnitt ändert, kann somit ein Anschlag an dem Halteelement ausgebildet sein. Damit kann das Halteelement in eine an einem Riegel ausgebildete Öffnung bis zu einer definierten Einstecktiefe einsteckbar oder eingesteckt sein. Hierzu kann demnach vorgesehen sein, dass die Riegel, insbesondere mittig angeordnete, zu den Halteelementen korrespondierende Durchstecköffnungen aufweisen. Diese Durchstecköffnungen an den Riegeln können insbesondere derart ausgebildet sein, dass ein Verrutschen der Halteelemente in Längsrichtung des Riegels ausgeschlossen ist.

Ein wesentlicher Vorteil dieser Ausgestaltung besteht darin, dass es für eine robuste Positionierung der PV-Module ausreichend ist, das Halteelement im Bereich einer oberen Nut an dem das Halteelement aufnehmenden Riegel zu befestigen, beispielsweise mittels einer Verschraubung; eine zusätzliche Befestigung im Bereich der zweiten, unteren Nut ist somit entbehrlich. Damit wird nicht nur Montageaufwand gespart, sondern die Halteelemente können in einem jeweiligen unteren Bereich, der eine untere Haltenut umgibt, schmaler als in einem oberen Bereich ausgebildet werden, was vorteilhaft ist, um Verschattungen der PV-Module zu vermeiden.

Eine weitere Optimierung der Halteelemente gemäß der Erfindung sieht vor, dass diese an einer Unterseite eine Abschrägung aufweisen, sodass eine Abschattung eines PV-Moduls vermieden werden kann, das in eine untere Nut des Halteelements eingesetzt ist.

Analog zu den Halteelementen kann auch für Riegel vorgesehen sein, dass Riegel an einer Unterseite eine Abschrägung aufweisen. Damit können auch noch für Randbereiche der aktiven Fläche des PV-Moduls jeweils große Einfallswinkel ohne Abschattung durch den jeweiligen Riegel gewährleistet werden.

Es kann vorteilhaft sein, die Tragkonstruktion so auszulegen, dass eine, insbesondere landwirtschaftliche, Bewirtschaftung der Fläche, auf der die PV-Anlage aufzustellen ist, insbesondere von Bewirtschaftungsfreiräumen zwischen einzelnen Reihen, weiterhin möglich bleibt. Zu diesem Zweck kann vorgesehen sein, dass zwischen dem Erdreich und einem untersten Riegel der Tragkonstruktion ein Freiraum freigehalten ist. Dieser Freiraum kann wenigstens 50 cm, bevorzugt wenigstens 60 cm, besonders bevorzugt wenigstens 1 m Höhe aufweisen. Es versteht sich, dass der Freiraum somit lediglich durch die notwendigen Pfosten unterbrochen wird.

Bei Aufstellung der PV-Module in Reihen kann hierbei insbesondere vorgesehen sein, dass die Reihen der PV-Anlage derart beabstandet angeordnet sind, dass zwischen den Reihen ein Bewirtschaftungsfreiraum mit einer Breite von wenigstens 6 Metern, wenigstens 8 Metern oder wenigstens 10 Metern besteht.

Für eine möglichst effiziente Flächenausnutzung, also insbesondere für eine maximale Energieerzeugung pro Fläche, kann es vorteilhaft sein, wenn die PV-Module mit der Tragkonstruktion im Wesentlichen eine Ebene bilden. Entsprechend können dafür die Pfosten entlang einer im Wesentlichen geraden Linie aufgestellt sein. Ab einer gewissen Mindestbreite der Aufstellfläche können die PV-Module auch in mehreren Reihen angeordnet sein. Hierbei ist es vorteilhaft, wenn diese Reihen, vorzugsweise gleichmäßig, voneinander beabstandet angeordnet sind. Denn es kann, je nach Höhe einer Reihe der PV-Anlage, ein Mindestabstand zu einer in Sonnenrichtung benachbarten Reihe derart gewählt sein, dass eine Abschattung der aktiven Flächen der PV-Module durch die benachbarte Reihe weitgehend ausgeschlossen ist. Hierbei können auch Reihen mit unterschiedlichen Höhen, also beispielsweise mit einer unterschiedlichen Anzahl an übereinander angeordneten PV-Modulen, vorgesehen sein.

Die Flächenausnutzung der PV-Anlage kann mit noch hinnehmbaren Einbußen in der Effizienz der Energiewandlung optimiert werden, wenn ein Abstand zwischen zwei Reihen wenigstens das Dreifache, bevorzugt wenigstens das Vierfache, besonders bevorzugt wenigstens das Fünffache einer maximalen Höhe einer aktiven Fläche der PV-Anlage beträgt. Damit lässt sich je nach geographischer Breite des Aufstellungsorts der PV-Anlage, eine Abschattung von PV-Modulen durch eine benachbarte Reihe weitgehend vermeiden, insbesondere am Morgen und am Abend. Die maximale Höhe einer aktiven Fläche der PV-Anlage kann beispielsweise durch einen vertikalen Abstand zwischen einem höchstgelegenen und einem niedrigst gelegenen Punkt, jeweils innerhalb der aktiven Flächen einer Reihe der PV-Anlage, definiert sein (vgl. hierzu auch die Figurenbeschreibung). Die Erfindung wird nun anhand von Ausführungsbeispielen näher beschrieben, ist aber nicht auf diese Ausführungsbeispiele beschränkt.

Es zeigt:
- Figur 1: eine dimetrische Ansicht einer erfindungsgemäßen Photovoltaik-Anlage,
- Figur 2: eine Detailansicht einer Reihe aus Pfosten derselben PV-Anlage,
- Figur 3: einen mittels eines C-Profils ausgestalteten Pfosten mit zwei montierten Riegeln,
- Figur 4: einen mittels eines Omega-Profils ausgestalteten Pfosten mit zwei montierten Riegeln,
- Figur 5: einen Querschnitt durch ein erfindungsgemäßes Halteelement, das in einen durch ein U-Profil gebildeten Riegel eingelegt ist,
- Figur 6: eine perspektivische Ansicht des Halteelements aus Figur 5, eingelegt in den U-förmigen Riegel,
- Figur 7: eine Draufsicht auf einen Pfosten und zu diesem asymmetrisch in nördlicher beziehungsweise südlicher Richtung beabstandete PV-Module sowie deren aktive Flächen,
- Figur 8: eine seitliche Querschnittsansicht eines horizontal verlaufenden Riegels und zu diesem oberhalb und unterhalb angeordneten PV-Modulen und deren aktiven Flächen und schließlich
- Figur 9: eine Seitenansicht einer erfindungsgemäßen PV-Anlage mit zwei Reihen von Pfosten, die beabstandet aufgestellt sind.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

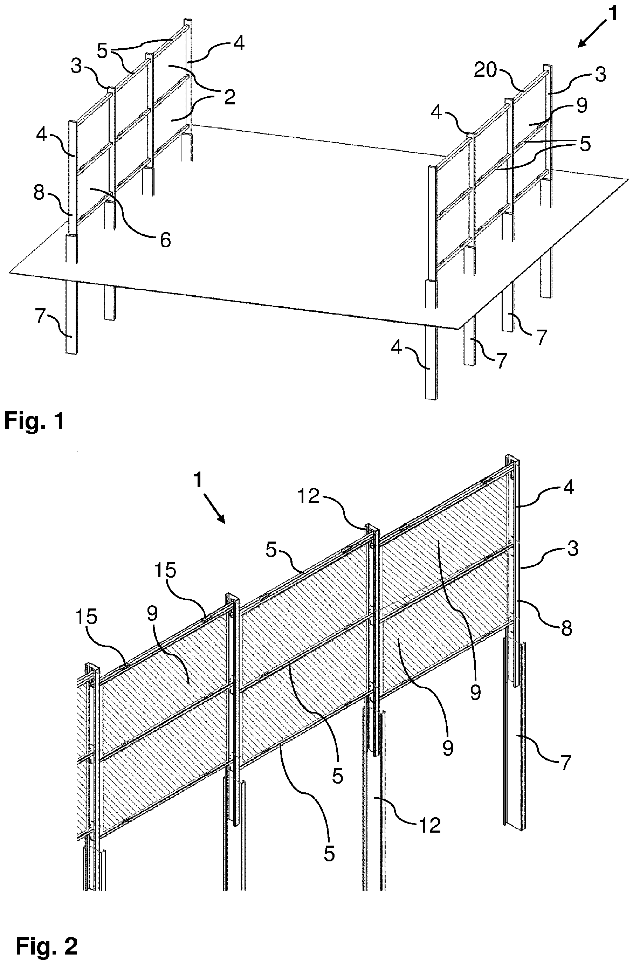

Die Figur 1 zeigt eine im Ganzen mit 1 bezeichnete Photovoltaik(PV)-Anlage mit mehreren bifazialen PV-Modulen 2, die aufrecht stehend an einer Tragkonstruktion 3 angeordnet sind. Die Tragkonstruktion 3 wird durch mehrere Pfosten 4 gebildet, die in einer Reihe aufgestellt sind. Genauer ist jeder Pfosten 4 in einen Befestigungsabschnitt 7 sowie einen damit verbundenen Halteabschnitt 8 aufgeteilt. Wie durch die horizontale Fläche, welche die Erdoberfläche illustriert, angedeutet wird, ist die Tragkonstruktion 3 mittels der Befestigungsabschnitte 7 im Erdreich verankert.

Wie die Figur 1 zeigt, verlaufen zwischen den Pfosten 4 mehrere Riegel 5 im Wesentlichen in horizontaler Richtung. Da die Pfosten 4 im Wesentlichen senkrecht stehend montiert sind, definieren somit jeweils zwei benachbarte Pfosten 4 und zwei benachbarte Riegel 5 ein im Wesentlichen rechteckiges Montagefeld 6. Bei dem in Figur 1 gezeigten Ausführungsbeispiel ist in jedem dieser rechteckigen Montagefelder 6 ein PV-Modul 2 angeordnet, und zwar senkrecht stehend. Durch die aufrechte Anordnung der PV-Module 2, die auf beiden Seiten aktive Flächen 9 aufweisen, wird es möglich, aus westlichen und östlichen Richtungen Sonnenlicht effizient einzufangen und mittels der PV-Anlage in elektrischen Strom zu wandeln.

Wie die detaillierte Ansicht der PV-Anlage 1 in Figur 2 zeigt, sind in vertikaler Richtung mehrere PV-Module 2, nämlich genau zwei, übereinander angeordnet. Daneben ist in Figur 2 gut zu erkennen, dass beispielsweise die obersten Riegel 5 in vertikaler Richtung versetzt zueinander angeordnet sind. Da die PV-Module 2 mittels Halteelementen 15 an den Riegeln 5 befestigt sind, kommt es dazu, dass horizontal benachbarte PV-Module 2 ebenfalls in vertikaler Richtung versetzt zueinander angeordnet sind. Diese Ausgestaltung ist bevorzugt, da damit ein einfacher Ausgleich unterschiedlicher Geländeverläufe erreichbar ist.

Wie mit Blick auf Figur 2 gut zu erkennen ist, liegen die jeweils durch C-Profile gebildeten Befestigungsabschnitte 7 und die Halteabschnitte 8 Rücken an Rücken aneinander an und überlappen sich somit in einem Überlappungsbereich. Hierbei ist es bevorzugt, wenn sich der Überlappungsbereich oberhalb des Erdreichs befindet, da dies die Montage des Halteabschnitts 8 an dem Befestigungsabschnitt 7 erleichtert und zudem der Befestigungsabschnitt 7 unabhängig von dem Halteabschnitt 8 im Erdreich verankert werden kann, z.B. durch Einrammen.

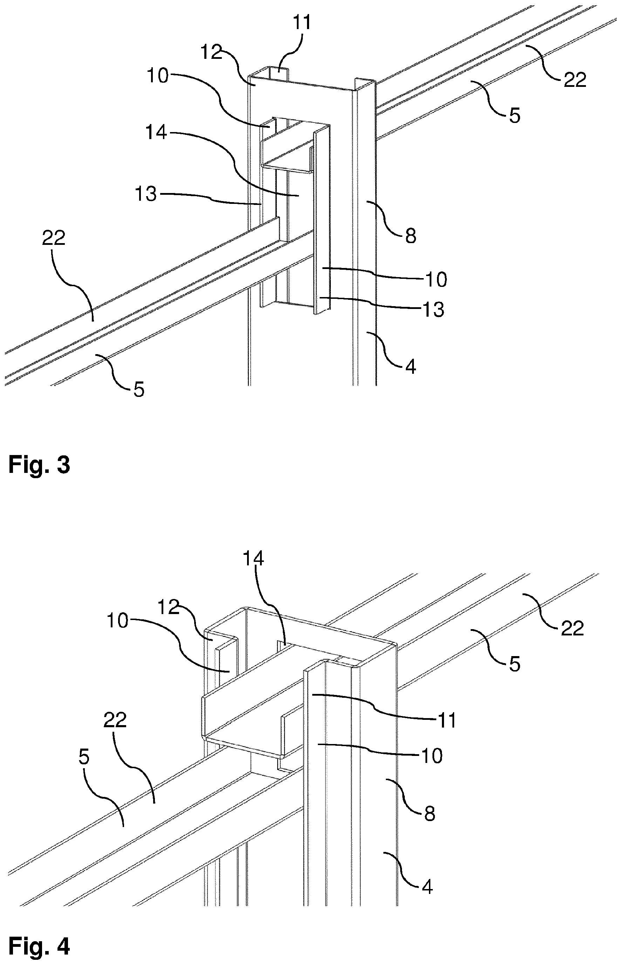

Die Figur 3 zeigt eine Ausgestaltung einer Verbindung eines Pfostens 4, genauer dessen oberen Halteabschnitts 8, mit zwei horizontal verlaufenden Riegeln 5. Während die Riegel 5 jeweils durch ein U-Profil 22 gebildet sind, ist der Halteabschnitt 8 des Pfostens 4 durch ein C-förmiges Profil 12 gebildet.

Zur Befestigung der beiden Riegel 5 ist an dem Pfosten 4 in Figur 3 eine als Durchstecköffnung ausgebildete Öffnung 14 vorgesehen, durch die die Riegel 5 durchgeführt bzw. eingesteckt sind. Die Öffnung 14 selbst ist durch eine Stanzung an dem C-Profil 12 des Pfostens 4 erzeugt worden. Durch einen Stanzvorgang können auf einfache Weise die beiden in Figur 3 dargestellten Laschen 13 erzeugt werden, die als Halteflächen 10 dienen. Beispielsweise lassen sich die beiden Riegel 5 mittels Schrauben mit selbstschneidendem Gewinde und entsprechend durchgeführten Bohrungen sehr einfach und in variabler Höhe an den beiden Laschen 13 befestigen.

Die Figur 4 zeigt eine hierzu als alternativ vorgesehene Ausbildung von Halteflächen 10. Hierzu ist der Pfosten 4, genauer sein oberer Halteabschnitt 8, mittels eines Omega-Profils 12 ausgestaltet. An seinen beiden freien Enden weist das Omega-Profil 12 zwei Flansche 11 auf, die, anders als die Laschen 13 in Figur 3, entlang der gesamten Länge des Omega-Profils 12 verlaufen und in vorteilhafter Weise als Halteflächen 10 genutzt werden können. So ist der linke Riegel 5 lediglich in das Omega-Profil 12 eingesteckt, während der rechte Riegel 5 durch eine Durchstecköffnung 14 geführt ist, die in einer Seitenfläche des Pfostens 4 ausgebildet ist. Wie gut zu erkennen ist, können beide Riegel 5 übereinanderliegend an den paarweise ausgebildeten Halteflächen 10 des Omega-Profils 12 befestigt werden. Durch die paarweise Ausgestaltung der Halteflächen 10, jeweils zu beiden Seitenflächen eines Riegels 5, kann eine besonders stabile Verbindung und damit eine besonders stabile Tragkonstruktion 3 erreicht werden. Wie Figur 4 zeigt, fassen die paarweise ausgestalteten Halteflächen 10 die Riegel 5 jeweils beidseitig.

Sowohl aus Figur 3 als auch aus Figur 4 erschließt sich der Vorteil einer weiteren Ausgestaltung, welche vorsieht, dass die Riegel 5 schmaler als die Pfosten 4 ausgebildet sind. Denn durch diese Ausgestaltung wird es sehr erleichtert, dass Riegel 5 durch Durchstecköffnungen 14 der Pfosten 4 geführt werden können und gleichzeitig von an den Pfosten 4 ausgebildeten Halteflächen 10 beidseitig, also insbesondere von außen wie in Figur 4, gefasst sind.

In einer Durchstecköffnung 14 können entweder zwei Riegel platziert sein, wie dies in Figur 3 illustriert ist, oder aber nur ein Riegel, wie das Ausführungsbeispiel der Figur 4 zeigt. Wie Figur 4 zeigt, kann somit ein weiterer, zu einem ersten in einer Durchstecköffnung 14 platzierten Riegel 5 benachbarter Riegel 5 auf einer der Durchstecköffnung 14 gegenüberliegenden Seite des Pfostens 4 montiert sein, und zwar ohne Verwendung einer Durchstecköffnung 14, nämlich mittels am Pfosten ausgebildeter Halteflächen 10, die in Figur 4 durch die Flansche 11 gebildet sind. Eine solche Ausgestaltung ist beispielsweise sehr nützlich, um unterschiedliche Höhen in unebenem Gelände auszugleichen.

Beispielsweise das in Figur 3 gezeigte Ausführungsbeispiel kann wahlweise so interpretiert werden, dass der Pfosten 4, zumindest sein Halteabschnitt 8, durch ein Profil 12 mit einer C-förmigen oder U-förmigen Grundform gebildet ist, wobei im Falle der U-Form die freien Enden des Profils 12 als Flansche 11 anzusehen wären. Bevorzugt sind jedoch Flansche 11, die als Halteflächen 10 dienen sollen, wie in Figur 4 ausgebildet, d.h. die Flansche 11 verlaufen bevorzugt in Richtung der Riegel 5. Denn diese Ausgestaltung ermöglicht ein flächiges Anliegen der Riegel 5. Das in Figur 4 gezeigte Omega-Profil 12 des Pfostens 4 wiederum kann auch aufgefasst werden als ein Profil 12 mit einer C-förmigen Grundform, wobei an den Enden dieses Profils 12 die dargestellten Halteflächen 10 als Flansche 11 ausgebildet sind.

Wie bereits in der Figur 2 angedeutet, werden die PV-Module 2 bevorzugt an den Riegeln 5 befestigt, wobei hierzu die in Figur 2 gezeigten Halteelemente 15 vorgesehen sind.

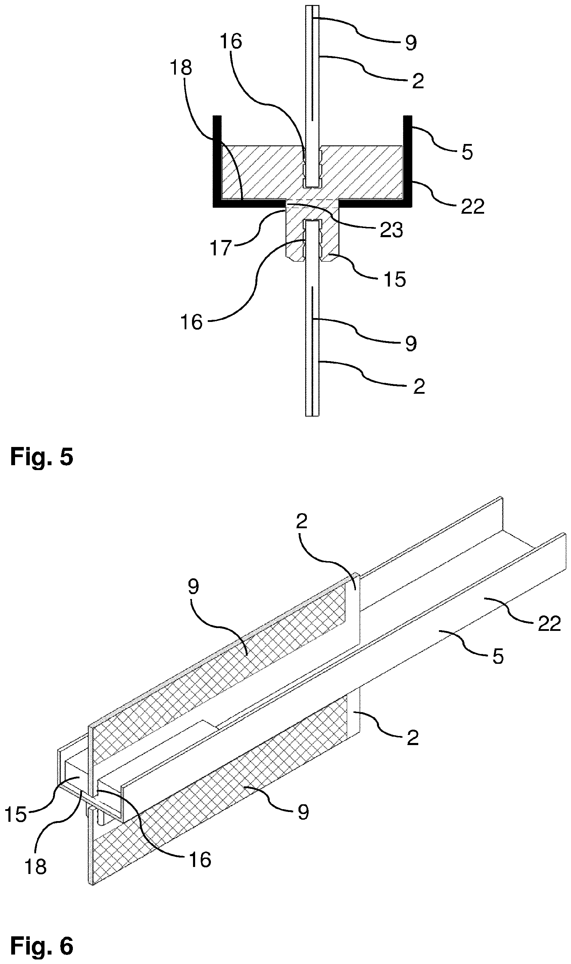

Figur 5 zeigt eine detaillierte Querschnittsansicht durch ein erfindungsgemäßes Halteelement 15. Das Halteelement 15 ist in eine Durchstecköffnung 23 eingesteckt, die an einer Unterseite des Riegels 5 ausgebildet ist, der durch ein U-förmiges Profil 22 gebildet ist. Hierbei ist an dem Halteelement 15 eine Anlagefläche 18 ausgebildet, mit der das Halteelement 15 flächig an der Innenseite des Riegels 5 anliegt. Durch die Querschnittsverjüngung 17, die in Höhe der Anlagefläche 18 ausgebildet ist, wird erreicht, dass das Halteelement 15 bis zu einer definierten Einstecktiefe in die Durchstecköffnung 23 einführbar ist. Damit wird unter anderem erreicht, dass die aktiven Flächen 9 der beiden PV-Module 2 in definiertem Abstand zu dem Riegel 5 montiert werden können, sodass insbesondere Abschattungen effizient vermieden werden können.

Wie gut in Figur 5 zu erkennen ist, sind die PV-Module 2 mit ihren Rändern jeweils in die beiden sich gegenüberliegenden Nutabschnitte 16 des Halteelements 15 eingesteckt. Dabei ist die Einstecktiefe gerade so gewählt, dass die aktiven Flächen 9 der PV-Module 2 durch das Halteelement 15 und/oder den Riegel 5 bis zu einem bestimmten Einfallswinkel nicht abgedeckt oder beschattet werden.

Die soeben erläuterten Merkmale der Halteelemente 15 sind auch nochmals anschaulich in der perspektivischen Ansicht der Figur 6 illustriert. Insbesondere wird aus Figur 6 ersichtlich, dass die Halteelemente 15 die PV-Module 2 bevorzugt beidseitig fassen, um eine sichere Halterung zu gewährleisten. Hierzu ist es bereits ausreichend, wenn die Halteelemente 15 die PV-Module nur entlang eines bestimmten Randabschnitts beidseitig fassen, wie in Figur 6 dargestellt.

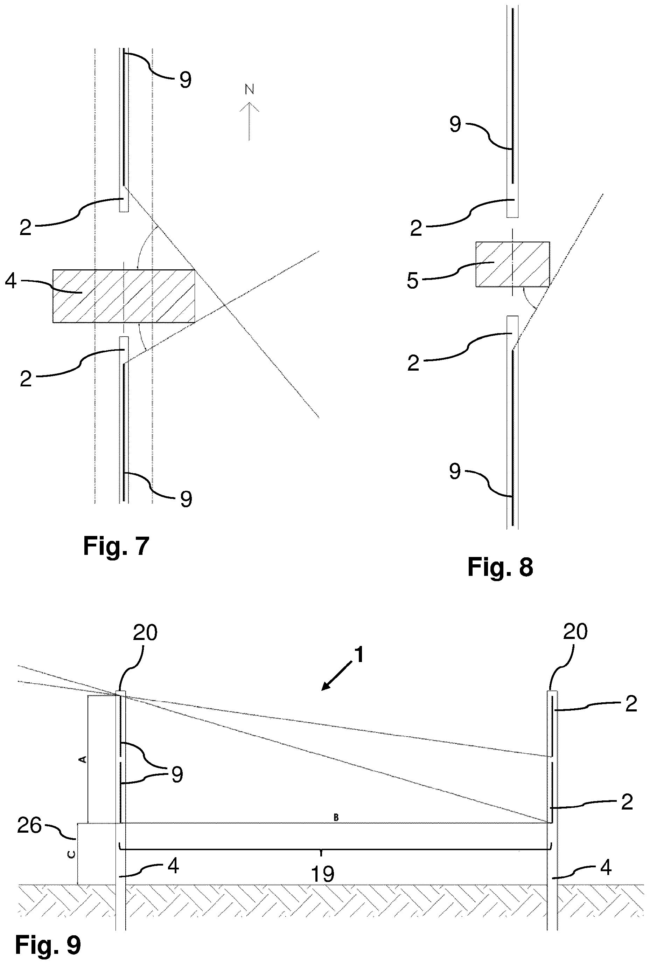

Die Figuren 7 und 8 illustrieren einen weiteren zentralen Aspekt, nämlich die aktiven Flächen 9 der PV-Module 2 von den Pfosten 4 und/oder Riegeln 5 beabstandet anzuordnen. Wie die Draufsicht auf den Pfosten 4 in Figur 7 zeigt, sind die aktiven Flächen 9 der beiden links und rechts des Pfostens 4 angeordneten PV-Module 2 so von dem Pfosten 4 beabstandet, das Sonnenlicht bis zu einem gewissen Einfallswinkel auf die aktive Fläche 9 gelangen kann, ohne dabei von dem Pfosten 4 abgeschattet zu werden. Der Einfallswinkel entspricht in Figur 7 gerade dem Winkel den die beiden dargestellten Sonnenstrahlen jeweils mit dem Lot (horizontal verlaufend in Figur 7) der betreffenden aktiven Fläche 9 einschließen.

Betrachtet man die beiden sich gegenüberliegenden Seiten der beiden PV-Module 2 genauer, so fällt auf, dass die aktiven Flächen 9 links und rechts des Pfostens nicht denselben Abstand zu dem Pfosten 4 aufweisen. Vielmehr sind sie asymmetrisch beabstandet zu diesem angeordnet. Durch den etwas größeren Abstand der aktiven Fläche 9 des in Figur 7 oben angeordneten PV-Moduls 2 wird erreicht, dass für Sonnenlicht aus südlichen Richtungen eine Abschattung der aktiven Fläche 9 für größere Einfallswinkel ausgeschlossen ist als dies für das in Figur 7 unten angeordnete PV-Modul 2 für Sonnenlicht aus nördlichen Richtungen der Fall ist. Mit anderen Worten wird am südlichen Rand eines PV-Moduls 2 der Abstand zwischen dem PV-Modul 2, genauer seiner aktiven Fläche 9, und dem Pfosten 4 etwas größer gewählt als an seinem nördlichen Rand, wie dies die beiden PV-Module 2 in Figur 7 illustrieren.

Die Figur 8 dagegen zeigt, wie durch eine Beabstandung der aktiven Flächen 9 der beiden dargestellten PV-Module 2 zu dem quer verlaufende Riegel 5 eine Abschattung der aktiven Flächen 9 verhindert werden kann. Da die Figur 8 einen Querschnitt durch einen horizontal verlaufenden Riegel 5 darstellt, fällt der dargestellte Sonnenstrahl von schräg oben sowie in der Regel seitlich auf das untere PV-Modul 2 ein. Durch die Beabstandung der aktiven Fläche 9 des unteren PV-Moduls 2 von dem Riegel 5 wird somit, wie in Figur 8 dargestellt, ein maximaler Einfallswinkel definiert, bis zu welchem Sonnenlicht abschattungsfrei auf die aktive Fläche 9 auftreffen kann. In der Figur 8 entspräche dieser Einfallswinkel gerade dem Winkel, den der mittels seiner Projektion auf die vertikal verlaufende Schnittebene der Figur 8 dargestellte einfallende Sonnenstrahl mit dem Lot auf die aktive Fläche 9 (waagerecht verlaufend in Figur 8) einschließt. Es versteht sich demnach, dass der tatsächliche Einfallswinkel zwischen Sonnenstrahl und Einfallslot in der Regel größer sein kann als der Winkel, den die (in Figur 8 illustrierte) Projektion dieses Strahls in der Schnittebene mit dem Einfallslot einschließt.

Für den seltenen Fall, dass bei den in Figur 8 gezeigten PV-Modulen das Einfallslot der aktiven Flächen gerade in Richtung der Sonne zeigte, entspräche der in Figur 8 durch den Sonnenstrahl illustrierte Einfallswinkel dem Sonnenstand, also der Höhe der Sonne über dem Horizont gemessen in Grad. In der Regel wird das Sonnenlicht jedoch schräg von der Seite auf die PV-Module einstrahlen, sodass Sonnenstand und Einfallswinkel voneinander abweichen. Auch die beiden in Figur 7 dargestellten Sonnenstrahlen fallen schräg von der Seite auf die PV-Module 2 ein, wobei auch hier jeweils Projektionen dieser Strahlen in die horizontal verlaufende Schnittebene der Figur 7 dargestellt sind.

Auch bei dem in Figur 8 dargestellten Ausführungsbeispiel könnte eine asymmetrische Beabstandung der PV-Module von dem Riegel 5 vorgesehen sein. Beispielsweise wäre es vorteilhaft, das obere PV-Modul 2, genauer dessen aktive Fläche 9, näher an den Riegel 5 heranzurücken. Damit würde einerseits die maximale Bauhöhe der Tragkonstruktion 3 und damit die wirkende Windlast reduziert; andererseits kann eine Abschattung der oberen aktiven Fläche 9 durch den darunterliegenden Riegel 5 ausgeschlossen werden, da das Sonnenlicht stets von schräg oben auf die PV-Module 2 einfällt. Das obere PV-Modul 2 könnte also nahe an den Riegel 5 heranrücken, bis die aktive Fläche 9 gerade noch nicht durch den Riegel 5 abgedeckt ist.

Die Figur 9 schließlich erläutert weitere Ausgestaltungen der Photovoltaik-Anlage 1, insbesondere die Beabstandung der Reihen 20 der PV-Anlage 1. Wie bereits in den Figuren 1 und 2 illustriert, können die PV-Module 2 mit der Tragkonstruktion 3 im Wesentlichen eine Ebene bilden. Zur effizienten Flächenausnutzung werden die PV-Module 2, wie in Figur 9 gezeigt, in voneinander beabstandeten Reihen 20 angeordnet. Auch die PV-Module 2 einer Reihe 20 bilden somit im Wesentlichen eine Ebene, wobei diese Ebene insbesondere in Nord-Südrichtung ausgerichtet sein kann, wie dies in Figur 9 der Fall ist. Somit kann bei einem beispielsweise aus westlicher Richtung einfallenden Sonnenstrahl (von links kommend in Figur 9) die in Figur 9 gezeigte Situation auftreten, dass also ein Teilbereich einer Reihe 20 (hier die unteren PV-Module der rechten Reihe 20) durch eine benachbarte Reihe 20 (hier die linke Reihe 20) abgeschattet ist.

Wie durch die beiden Sonnenstrahlen in Figur 9 angedeutet, nimmt dabei die Abschattung zu, je niedriger der Sonnenstand ist. Daher ist eine wie in Figur 9 gezeigte Ausgestaltung bevorzugt, bei der der mit B bezeichnete Abstand zwischen den beiden Reihen 20 mehr als das Dreifache der maximalen Höhe einer aktiven Fläche 9 der PV-Anlage 1 beträgt. Diese maximale Höhe entspricht in Figur 9 gerade dem vertikalen Abstand A, der den Abstand zwischen einem höchstgelegenen und einem niedrigstgelegenen Punkt, jeweils innerhalb der aktiven Flächen 9 der linken Reihe 20, definiert. Durch den groß gewählten horizontalen Abstand B zwischen den beiden Reihen 20 wird somit, wie der obere Sonnenstrahl in Figur 9 zeigt, gewährleistet, dass auch bei einem niedrigen Sonnenstand nur ein Teilbereich der rechten Reihe 20 abgeschattet wird, sodass zumindest die oberen aktiven Flächen 9 der rechten Reihe 20 in Figur 9 weiterhin zur Stromproduktion genutzt werden können.

Ein weiterer Vorteil der Beabstandung der Reihen 20 der PV-Anlage 1 besteht in dem Bewirtschaftungsfreiraum 19, der zwischen den Reihen entsteht, denn dieser lässt sich beispielsweise landwirtschaftlich nutzen. Hierzu ist vorgesehen, den in Figur 9 mit einer Breite B bezeichneten Bewirtschaftungsfreiraum 19 nutzbar zu machen, indem jeweils in jeder Reihe zwischen den Pfosten 4 und zwischen dem untersten Riegel 5 der Tragkonstruktion 3 und der Erdoberfläche ein Freiraum 26 freigehalten ist. Dadurch, dass die PV-Module 2 somit mindestens in einer Höhe C über dem Erdboden angeordnet sind (vgl. Figur 9), kann zum einen eine Beschädigung derselben durch Steinschlag bei einer landwirtschaftlichen Nutzung des Bewirtschaftungsfreiraums 19 vermieden werden. Zum anderen werden durch diese Ausgestaltung insbesondere die unteren aktiven Flächen 9 der PV-Anlage einer Abschattung durch Bewuchs oder Anpflanzungen im Bewirtschaftungsfreiraum 19 weitgehend entzogen. Der Freiraum 26 schafft somit die notwendigen Voraussetzungen zur landwirtschaftlichen Nutzung des Bewirtschaftungsfreiraums 19 ohne nennenswerte Einbußen bei der Stromproduktion.

Anhand der Figur 9 lassen sich auch die Vorteile einer Aufteilung der PV-Anlage in übereinander angeordnete elektrische Zeilen 21 verstehen. Denn dadurch, dass die untere Zeile 21 der rechten Reihe 20 in Figur 9 elektrisch von der oberen Zeile 21 der rechten Reihe 20 in Figur 9 getrennt ist, d.h. insbesondere jeweils einem separaten Wechselrichtereingang zugeordnet ist, kann sich die Abschattung der unteren Zeile 21 nicht auf den von der oberen Zeile 21 produzierten Strom auswirken. In analoger Weise könnte in Figur 9 der Effekt einer Teilabschattung des oberen PV-Moduls 2 der rechten Reihe 20 dadurch minimiert werden, dass dieses PV-Modul 2 zwei horizontal verlaufende und übereinander angeordnete elektrische Zeilen aufweist, gebildet beispielsweise durch zwei elektrisch voneinander getrennte aktive Flächen 9 innerhalb des PV-Moduls 2.

### Bezugszeichenliste

- 1: Photovoltaik-Anlage
- 2: PV-Modul
- 3: Tragkonstruktion
- 4: Pfosten
- 5: Riegel
- 6: Montagefeld
- 7: Befestigungsabschnitt
- 8: Halteabschnitt
- 9: (obere) aktive Fläche
- 9': (untere) aktive Fläche
- 10: Halteflächen
- 11: Flansch
- 12: Profil von 4
- 13: Lasche
- 14: Öffnung, insbesondere Durchstecköffnung, von 4 (für 5)
- 15: Halteelemente
- 16: Nutabschnitt
- 17: Querschnittsverjüngung
- 18: Anlagefläche
- 19: Bewirtschaftungsfreiraum
- 20: Reihe
- 21: elektrische Zeile
- 22: Profil von 5
- 23: Öffnung, insbesondere Durchstecköffnung, von 5 (für 15)
- 24: Abschrägung
- 25: Drehachse
- 26: Freiraum

## Patentansprüche

1. **Photovoltaik(PV)-Anlage (1)** mit mehreren bifazialen PV-Modulen (2), die aufrecht stehend an einer Tragkonstruktion (3) angeordnet sind,
- wobei die Tragkonstruktion (3) mehrere Pfosten (4) aufweist, die an oder im Erdreich befestigt, insbesondere verankert, sind,
- wobei an den Pfosten (4) Riegel (5) befestigt sind, die jeweils zwei benachbarte Pfosten (4) miteinander verbinden und wobei jeweils zwei Pfosten (4) und zwei Riegel (5) ein im Wesentlichen rechteckiges Montagefeld (6) definieren, in dem wenigstens ein PV-Modul (2) angeordnet ist,
- wobei die PV-Module (2) an den Riegeln (5) mittels separater Halteelemente (15) befestigt sind und
- wobei die Halteelemente (15) Nutabschnitte (16) bereitstellen, in die ein Rand des jeweiligen PV-Moduls (2) im montierten Zustand eingesteckt ist,
**dadurch gekennzeichnet,**
- **dass** an dem jeweiligen Halteelement (15) eine Anlagefläche (18) ausgebildet ist, mit der das jeweilige Halteelement (15) flächig an dem jeweiligen Riegel (5) anliegt, um ein verkippungsfreies Montieren der Halteelemente (15) zu ermöglichen.

2. Photovoltaik-Anlage (1) nach Anspruch 1, **dadurch gekennzeichnet, dass** die Pfosten (4) im Wesentlichen vertikal und/oder die Riegel (5) im Wesentlichen horizontal ausgerichtet sind und/oder dass in vertikaler Richtung mehrere, insbesondere bis zu vier, PV-Module (2) übereinander angeordnet sind.

3. Photovoltaik-Anlage (1) nach Anspruch 1 oder 2, **dadurch gekennzeichnet, dass** die Pfosten (4) zumindest in einen mit dem Erdreich verbundenen Befestigungsabschnitt (7) und einen damit verbindbaren oder verbundenen Halteabschnitt (8), der sich oberhalb des Befestigungsabschnitts (7) erstreckt, unterteilt sind und/oder dass horizontal benachbarte PV-Module (2) in vertikaler Richtung versetzt zueinander angeordnet sind.

4. Photovoltaik-Anlage (1) nach einem der vorhergehenden Ansprüche, **dadurch gekennzeichnet, dass** aktive Flächen (9) der PV-Module (2) von den Pfosten (4) und/oder Riegeln (5) beabstandet angeordnet sind, insbesondere derart, dass zumindest bis zu einem Einfallswinkel von 20°, besonders bevorzugt zumindest bis zu einem Einfallswinkel von 30°, eine Abschattung der aktiven Fläche (9) durch Pfosten (4) ausgeschlossen ist und/oder dass zumindest bis zu einem Einfallswinkel von 25°, vorzugs-weise zumindest bis zu einem Einfallswinkel von 30° oder sogar 40°, eine Abschattung der aktiven Fläche (9) durch Riegel (5) ausgeschlossen ist.

5. Photovoltaik-Anlage (1) nach einem der vorhergehenden Ansprüche, **dadurch gekennzeichnet, dass** die aktiven Flächen (9) der PV-Module (2) an einander gegenüberliegenden Seiten asymmetrisch beabstandet zu Pfosten (4) und/oder Riegeln (5) angeordnet sind.

6. Photovoltaik-Anlage (1) nach einem der vorhergehenden Ansprüche, **dadurch gekennzeichnet, dass** an den Pfosten (4) Halteflächen (10) ausgebildet sind, an denen ein zugehöriger Riegel (5) flächig befestigbar ist, insbesondere wobei die Halteflächen (10) als Flansche (11) an einem Profil (12) und/oder als Laschen (13) an einer Öffnung (14) in einem Profil (12) ausgebildet sind.

7. Photovoltaik-Anlage (1) nach Anspruch 6, **dadurch gekennzeichnet, dass** die Halteflächen (10) paarweise ausgebildet sind, um einen zwischen den Halteflächen (10) eingeschobenen Riegel (5) beidseitig zu fassen, und/oder dass die Riegel (5) schmaler als die Pfosten (4), insbesondere schmaler als ein Abstand zwischen paarweise ausgebildeten Halteflächen (10), ausgebildet sind.

8. Photovoltaik-Anlage (1) nach einem der vorhergehenden Ansprüche, **dadurch gekennzeichnet, dass** an den Pfosten (4) Durchstecköffnungen (14) ausgebildet sind, um jeweils einen Riegel (5) oder dessen Ende aufzunehmen.

9. Photovoltaik-Anlage (1) nach Anspruch 8, **dadurch gekennzeichnet, dass** in einer Durchstecköffnung (14) zwei Riegel (5) platziert sind oder dass in einer Durchstecköffnung (14) nur ein Riegel (5) platziert ist, während ein weiterer Riegel (5) auf einer der Durchstecköffnung (14) gegenüberliegenden Seite des Pfostens (4) ohne Durchstecköffnung (14) und mittels am Pfosten (4) ausgebildeter Halteflächen (10) montiert ist, insbesondere wobei an einer Haltefläche (10) ein durch eine Durchstecköffnung (14) gesteckter Riegel (5) und ein weiterer Riegel (5) befestigt sind.

10. Photovoltaik-Anlage (1) nach einem der Ansprüche 3 bis 9, **dadurch gekennzeichnet, dass** die Pfosten (4), zumindest in dem Halteabschnitt (8), ein Profil (12) mit einer C-förmigen, U-förmigen, Z-förmigen oder S-förmigen Grundform aufweisen, insbesondere wobei an den Enden des Profils (12) zusätzliche Halteflächen (10) als Flansche (11) ausgebildet sind.

11. Photovoltaik-Anlage (1) nach einem der vorhergehenden Ansprüche, wobei die Riegel (5) an einer Unterseite eine Abschrägung (24) aufweisen.

12. Photovoltaik-Anlage (1) nach Anspruch 11, **dadurch gekennzeichnet, dass** die Halteelemente (15) jeweils eine Querschnittsverjüngung (17) aufweisen, sodass ein Halteelement (15) in eine an einem Riegel ausgebildete Durchstecköffnung (14) bis zu einer definierten Einstecktiefe einsteckbar oder eingesteckt ist.

13. Photovoltaik-Anlage (1) nach einem der vorhergehenden Ansprüche, **dadurch gekennzeichnet, dass** zwischen dem Erdreich und einem untersten Riegel (5) ein Freiraum (26) freigehalten ist, insbesondere wobei der Freiraum (26) eine Höhe von wenigstens 50 cm, wenigstens 60 cm oder wenigstens 1 m aufweist, insbesondere wobei Reihen (20) der PV-Anlage (1) derart beabstandet angeordnet sind, dass zwischen den Reihen (20) ein Bewirtschaftungsfreiraum mit einer Breite von wenigstens 6 Metern, wenigstens 8 Metern oder wenigstens 10 Metern besteht.

14. Photovoltaik-Anlage (1) nach einem der vorhergehenden Ansprüche, **dadurch gekennzeichnet, dass** die PV-Module (2) mit der Tragkonstruktion (3) im Wesentlichen eine Ebene bilden und/oder dass die PV-Module (2) in mehreren voneinander beabstandeten Reihen (20) angeordnet sind, wobei die PV-Module (2) einer Reihe (20) im Wesentlichen eine Ebene bilden.

15. Photovoltaik-Anlage (1) nach Anspruch 14, **dadurch gekennzeichnet, dass** ein Abstand zwischen zwei Reihen (20) wenigstens das Dreifache, bevorzugt wenigstens das Vierfache, besonders bevorzugt wenigstens das Fünffache einer maximalen Höhe einer aktiven Fläche (9) der PV-Anlage (1) beträgt.

## Claims

1. Photovoltaic (PV) system (1) having a plurality of bifacial PV modules (2) which are arranged upright on a supporting structure (3),
- wherein the supporting structure (3) has a plurality of posts (4) which are fastened, in particular anchored, to or in the ground,
- wherein cross-members (5) are fastened to the posts (4), which in each case connect two adjacent posts (4) to one another and wherein in each case two posts (4) and two cross-members (5) define a substantially rectangular mounting field (6), in which at least one PV module (2) is arranged,
- wherein the PV modules (2) are fastened to the cross-members (5) by means of separate retaining elements (15), and
- wherein the retaining elements (15) provide groove sections (16) into which an edge of the respective PV module (2) is inserted in the mounted state, **characterized in that**
- a contact surface (18) is formed on the respective retaining element (15) with which the respective retaining element (15) rests flatly against the respective cross-member (5) to enable the retaining elements (15) to be mounted without tilting.

2. Photovoltaic system (1) according to claim 1, **characterized in that** the posts (4) are aligned essentially vertically and/or the cross-members (5) are aligned essentially horizontally and/or **in that** several, in particular up to four, PV modules (2) are arranged one above the other in the vertical direction.

3. Photovoltaic system (1) according to claim 1 or 2, **characterized in that** the posts (4) are subdivided at least into a fastening section (7) connected to the ground and a retaining section (8) which can be connected or is connected thereto and extends above the fastening section (7), and/or **in that** horizontally adjacent PV modules (2) are arranged offset from one another in the vertical direction.

4. Photovoltaic system (1) according to one of the preceding claims, **characterized in that** active surfaces (9) of the PV modules (2) are arranged at a distance from the posts (4) and/or cross-members (5), in particular in such a way that at least up to an angle of incidence of 20°, particularly preferably at least up to an angle of incidence of 30°, shading of the active surface (9) by posts (4) is excluded and/or that shading of the active surface (9) by cross-members (5) is excluded at least up to an angle of incidence of 25°, preferably at least up to an angle of incidence of 30° or even 40°.

5. Photovoltaic system (1) according to one of the preceding claims, **characterized in that** the active surfaces (9) of the PV modules (2) are arranged on opposite sides at an asymmetrical distance from posts (4) and/or cross-members (5).

6. Photovoltaic system (1) according to one of the preceding claims, **characterized in that** retaining surfaces (10) are formed on the posts (4), to which retaining surfaces an associated cross-member (5) can be attached in a planar manner, in particular wherein the retaining surfaces (10) are formed as flanges (11) on a profile (12) and/or as tabs (13) on an opening (14) in a profile (12).

7. Photovoltaic system (1) according to claim 6, **characterized in that** the retaining surfaces (10) are formed in pairs in order to grip a cross-member (5) inserted between the retaining surfaces (10) on both sides, and/or **in that** the cross-members (5) are narrower than the posts (4), in particular narrower than a distance between retaining surfaces (10) formed in pairs.

8. Photovoltaic system (1) according to one of the preceding claims, **characterized in that** push-through openings (14) are formed on the posts (4) in order to accommodate a cross-member (5) or its end in each case.

9. Photovoltaic system (1) according to claim 8, **characterized in that** two cross-members (5) are placed in a push-through opening (14) or **in that** only one cross-member (5) is placed in a push-through opening (14), while a further cross-member (5) is mounted on a side of the post (4) without push-through opening (14) which is opposite the push-through opening (14) and by means of retaining surfaces (10) formed on the post (4), in particular wherein a cross-member (5) inserted through a push-through opening (14) and a further cross-member (5) are fastened to a retaining surface (10).

10. Photovoltaic system (1) according to one of claims 3 to 9, **characterized in that** the posts (4), at least in the retaining section (8), have a profile (12) with a C-shaped, U-shaped, Z-shaped or S-shaped basic shape, in particular wherein additional retaining surfaces (10) are formed as flanges (11) at the ends of the profile (12).

11. Photovoltaic system (1) according to one of the preceding claims, wherein the cross-members (5) have a chamfer (24) on an underside.

12. Photovoltaic system (1) according to claim 11, **characterized in that** the retaining elements (15) each have a cross-sectional taper (17), so that a retaining element (15) can be inserted or is inserted into a push-through opening (14) formed on a cross-member (5) up to a defined insertion depth.

13. Photovoltaic system (1) according to one of the preceding claims, **characterized in that** a free space (26) is kept free between the ground and a lowest cross-member (5), in particular wherein the free space (26) has a height of at least 50 cm, at least 60 cm or at least 1 m, in particular wherein rows (20) of the PV system (1) are arranged spaced apart in such a way that there is a cultivation free space with a width of at least 6 meters, at least 8 meters or at least 10 meters between the rows (20).

14. Photovoltaic system (1) according to one of the preceding claims, **characterized in that** the PV modules (2) essentially form a plane with the supporting structure (3) and/or **in that** the PV modules (2) are arranged in a plurality of rows (20) spaced apart from one another, wherein the PV modules (2) of a row (20) essentially form a plane.

15. Photovoltaic system (1) according to claim 14, **characterized in that** a distance between two rows (20) is at least three times, preferably at least four times, particularly preferably at least five times a maximum height of an active surface (9) of the PV system (1).

## Revendications

1. **Installation photovoltaïque (PV) (1)** comprenant plusieurs modules PV bifaciaux (2) qui sont disposés verticalement sur une structure porteuse (3),
- la structure porteuse (3) présentant plusieurs montants (4) qui sont fixés, en particulier ancrés, au sol ou dans le sol,
- des traverses (5) étant fixées aux montants (4), lesquelles connectent respectivement deux montants (4) voisins l'un à l'autre et deux montants (4) et deux traverses (5) définissant respectivement un champ de montage (6) essentiellement rectangulaire, dans lequel est disposé au moins un module PV (2),
- les modules PV (2) étant fixés aux traverses (5) au moyen d'éléments de retenue séparés (15) et
- les éléments de retenue (15) fournissant des sections de rainure (16) dans lesquelles un bord du module PV (2) respectif est inséré à l'état monté,
**caractérisée en ce**
- **qu'**une surface d'appui (18) est formée sur l'élément de retenue (15) respectif, avec laquelle l'élément de retenue (15) respectif s'appuie à plat sur la traverse (5) respective, afin de permettre un montage sans basculement des éléments de retenue (15).

2. Installation photovoltaïque (1) selon la revendication 1, **caractérisée en ce que** les montants (4) sont orientés essentiellement verticalement et/ou les traverses (5) sont orientées essentiellement horizontalement et/ou **en ce que** plusieurs modules PV (2), en particulier jusqu'à quatre, sont disposés les uns au-dessus des autres dans le sens vertical.

3. Installation photovoltaïque (1) selon la revendication 1 ou 2, **caractérisée en ce que** les montants (4) sont divisés au moins en une section de fixation (7) connectée au sol et une section de retenue (8) connectable ou connectée à celle-ci, qui s'étend au-dessus de la section de fixation (7), et/ou **en ce que** des modules PV (2) voisins horizontalement sont disposés décalés les uns par rapport aux autres dans la direction verticale.

4. Installation photovoltaïque (1) selon l'une des revendications précédentes, **caractérisée en ce que** des surfaces actives (9) des modules PV (2) sont disposées espacées des montants (4) et/ou des traverses (5), en particulier de telle sorte qu'au moins jusqu'à un angle d'incidence de 20°, de préférence au moins jusqu'à un angle d'incidence de 30°, un ombrage de la surface active (9) par des montants (4) est exclu et/ou qu'un ombrage de la surface active (9) par des traverses (5) est exclu au moins jusqu'à un angle d'incidence de 25°, de préférence au moins jusqu'à un angle d'incidence de 30° ou même de 40°.

5. Installation photovoltaïque (1) selon l'une des revendications précédentes, **caractérisée en ce que** les surfaces actives (9) des modules PV (2) sont disposées sur des côtés opposés, espacés de façon asymétrique des montants (4) et/ou des traverses (5).

6. Installation photovoltaïque (1) selon l'une des revendications précédentes, **caractérisée en ce que** des surfaces de retenue (10) sont formées sur les montants (4), sur lesquelles une traverse (5) associée est fixable à plat, en particulier les surfaces de retenue (10) étant formées comme des brides (11) sur un profilé (12) et/ou comme des pattes (13) sur une ouverture (14) dans un profilé (12).

7. Installation photovoltaïque (1) selon la revendication 6, **caractérisée en ce que** les surfaces de retenue (10) sont réalisées par paires afin de saisir des deux côtés une traverse (5) insérée entre les surfaces de retenue (10), et/ou **en ce que** les traverses (5) sont réalisées plus étroites que les montants (4), en particulier plus étroites qu'une distance entre des surfaces de retenue (10) réalisées par paires.

8. Installation photovoltaïque (1) selon l'une des revendications précédentes, **caractérisée en ce que** des ouvertures de passage (14) sont formées sur les montants (4) pour recevoir chacune une traverse (5) ou son extrémité.

9. Installation photovoltaïque (1) selon la revendication 8, **caractérisée en ce que** deux traverses (5) sont placées dans une ouverture de passage (14) ou qu'une seule traverse (5) est placée dans une ouverture de passage (14), tandis qu'une autre traverse (5) est montée sur un côté du montant (4) opposé à l'ouverture de passage (14), sans ouverture de passage (14) et au moyen de surfaces de retenue (10) formées sur le montant (4), en particulier une traverse (5) insérée à travers une ouverture de passage (14) et une autre traverse (5) étant fixées sur une surface de retenue (10).

10. Installation photovoltaïque (1) selon l'une des revendications 3 à 9, **caractérisée en ce que** les montants (4) présentent, au moins dans la section de retenue (8), un profilé (12) ayant une forme de base en C, en U, en Z ou en S, en particulier des surfaces de retenue (10) supplémentaires étant formées comme des brides (11) aux extrémités du profilé (12).

11. Installation photovoltaïque (1) selon l'une des revendications précédentes, les traverses (5) présentant un chanfrein (24) sur une face inférieure.

12. Installation photovoltaïque (1) selon la revendication 11, **caractérisée en ce que** les éléments de retenue (15) présentent chacun un rétrécissement de section (17), de sorte qu'un élément de retenue (15) est enfichable ou enfiché dans une ouverture de passage (14) formée sur une traverse jusqu'à une profondeur d'enfichage définie.

13. Installation photovoltaïque (1) selon l'une des revendications précédentes, **caractérisée en ce qu'**un espace libre (26) est maintenu libre entre le sol et une traverse (5) la plus basse, en particulier l'espace libre (26) présentant une hauteur d'au moins 50 cm, d'au moins 60 cm ou d'au moins 1 m, en particulier des rangées (20) de l'installation photovoltaïque (1) étant espacées d'une telle façon qu'il existe entre les rangées (20) un espace libre d'exploitation d'une largeur d'au moins 6 mètres, d'au moins 8 mètres ou d'au moins 10 mètres.

14. Installation photovoltaïque (1) selon l'une des revendications précédentes, **caractérisée en ce que** les modules PV (2) forment essentiellement un plan avec la structure porteuse (3) et/ou **en ce que** les modules PV (2) sont disposés en plusieurs rangées (20) espacées les unes des autres, les modules PV (2) d'une rangée (20) formant essentiellement un plan.

15. Installation photovoltaïque (1) selon la revendication 14, **caractérisée en ce qu'**une distance entre deux rangées (20) est au moins le triple, de préférence au moins le quadruple, plus préférablement au moins le quintuple d'une hauteur maximale d'une surface active (9) de l'installation photovoltaïque (1).
